# EUROPEAN PATENT APPLICATION

(11) **EP 1 796 391 A1**
(43) Date of publication of application: **13.06.2007**
(21) Application number: 07103887.1
(22) Date of filing: 30.03.2005
(51) Int. Cl.: H04N 7/173, G06Q 30/00

(54) **Electronic device and methods for reproducing mass media content and related content**

(62) Divisional of application: 05006964.0
(71) Applicant: Roeding, Cyriac R., 61273 Wehrheim (DE)
(72) Inventor: Roeding, Cyriac R., 61273 Wehrheim (DE)
(74) Representative: Schneider, Günther Martin

(57) **Abstract**

The present invention relates to an electronic device and methods of distributing content to at least one user, comprising the steps of: transmitting mass media content to a user device for being reproduced to the user; matching content which is related to the mass media content, information descriptive of the mass media content, and data which is related to the user; transmitting the resulting matched related content to the user device for being reproduced in combination with the mass media content to the user; and receiving and processing user feedback data transmitted from the user device, the user feedback data being representative of a reaction of the user with respect to the reproduced resulting matched related content and mass media content.

## Description

### FIELD OF THE INVENTION

The present invention relates in general to interactive and individualized mass media, and in particular to devices, methods, computer programs, and systems in general of "intelligent" matching and combination of the main mass media content with individualized and interactive related media content. The matching takes into account the mass media content, and the related content, and individual user-related data. The display and interactivity are to happen in one and the same media device, using several required input/output channels and algorithms. The media devices include in particular mobile phones, but also interactive television sets, personal computers, PDA's etc.

There exists a demand from mass media users (e.g. television viewers), mass media producers (e.g. television stations, production companies, movie/music producers), and advertisers alike, for media content which is more tailored to individual interests of the user than it is today, and which leads to a higher personal user involvement via simple, fast interactivity.

Interactive mass media such as iTV have long been discussed, and have partially been implemented for a high cost both in terms of infrastructure as well as for individual service subscribers (e.g. BSkyB in the UK). Thus nowadays only those users who receive a special hardware set-top box for interactive television, and who subscribe for a substantial fee, can receive and participate in any form of interactive television at all.

In addition to this cost and new infrastructure investment, however, there are substantial inefficiencies on the content selection, display and interactivity level. So far, a display of "related content" (such as advertising) is usually manually "booked" in advance around certain types of "main mass media content", e.g. specific television shows, in order to reach an aspired target group of viewers. This "pre-booking" in the supposedly "proper" mass media environment has so far been the standard "matching process" between mass media content and related content.
Therefore, often the selected elements of the main mass media content match only roughly the actual topic of the related content, and the individual user preferences. As a consequence, in a drastic example, a user watching a daily television talk show might watch a commercial for diapers during the commercial break (the commercial has been booked long in advance because supposedly the target groups of the show and the advertised product "match"). However, a) the live talk show topic of the day might revolve around teenage pregnancy due to some current news which came up in the daily press; and thus the diapers are in an inappropriate environment, although the "broad target group" fits in terms of demographics; b) an individual viewer might belong to the 30% outside the main target group of the show (e.g. a 55-year-old woman); and thus this individual viewer will not have any personal need for the advertised products, thus the advertising is inappropriate on the individual level.

Furthermore, the production costs for related content, e.g. for filming television advertising spots, are often very substantial. This limits the number of companies who can afford to produce such content, to a rather small group. As a result, consumers often receive related content mostly from large, well-known and established companies, while new, small companies are due to the high fixed set-up costs for advertising at a disadvantage in the market, and fruitful competition and innovation are therefore not always developing to their full potential.

The aforementioned various shortcomings of the prior art are certainly also and especially true for mass media content displayed on mobile phones and other mobile devices.

The terms "mass media" and "main mass media content" should in this context be construed as streaming moving-picture content (such as a television program or a movie), or downloaded moving-picture content (such as downloadable video clips or TV program excerpts), or other data-rich content (e.g. sound/music), which is not mainly in text format.

"Related content" should in this context be construed as content which is for varying reasons linked to the main mass media content, such as, but not limited to, advertising messages, quiz questions, sweepstakes, invitations to buy certain products immediately etc.

### SUMMARY OF INVENTION

An object of the present invention is to overcome or at least mitigate the disadvantages of prior art.

In the first aspect, the invention provides an electronic device for reproducing content to a user, comprising:
- means for receiving mass media content;
- means for receiving content which is related to the mass media content;
- means for matching the content which is related to the mass media content, information descriptive of the mass media content, and data which is related to the user;
- means for reproducing the resulting matched related content in combination with the mass media content;
- means for generating user feedback data, the user feedback data being representative of a reaction of the user with respect to the reproduced resulting matched related content and mass media content; and
- means for processing and transmitting the generated user feedback data.

The electronic device may further comprise means for acquiring the user-related data.

The electronic device may further comprise means for storing the user-related data, and the related media content.

The electronic device may be one of mobile phone, personal digital assistant, and personal computer.

In a second aspect, the invention provides a method of distributing content to at least one user, comprising the steps of:
- transmitting mass media content to a user device for being reproduced to the user;
- matching content which is related to the mass media content, information descriptive of the mass media content, and data which is related to the user;
- transmitting the resulting matched related content to the user device for being reproduced in combination with the mass media content to the user; and
- receiving and processing user feedback data transmitted from the user device, the user feedback data being representative of a reaction of the user with respect to the reproduced resulting matched related content and mass media content.

Herein, the mass media content may comprise at least one of streaming moving picture content, downloadable moving picture content, streaming audio content, and downloadable audio content.

Herein, the information descriptive of mass media content may be at least one of speech-to-text type, closed captioning type, subtitling type, video-text type, electronic-programming-guide type, internet-web type.

Further, the related content may comprise at least one of advertising messages, quiz questions, sweepstakes, peer-to-peer messaging, product-buy-offers, service-order-offers.

The mass media content and the matched related content may be transmitted via two different transmission channels.

In a further embodiment of the invention, all transmission steps may be performed via wireless communication, and the user device is a mobile communication device.

The matched related content may be displayed at the user device sequentially with respect to the mass media content.

In an alternative embodiment of the invention, the matched related content may be reproduced at the user device simultaneously with the mass media content.

The matching step may be performed simultaneously with transmitting the mass media content.

The related content may comprise key words which are provided via a keyword renting system.

The user feedback data may be used for triggering a commercial action.

Further, the user feedback data may relate to one of electronic coupon and billing operation.

Advantageously, user-related data, including user feedback data, may be processed with statistical methods.

According to a further embodiment, the invention comprises the steps of:
- receiving a first indication which mass media content is currently transmitted to a user device; associating a transmitting time information with the first indication;
- receiving a second indication which mass media content is currently reproduced at a predetermined user device; associating a reproducing time information with the second indication;
whereby transmitting time information and receiving time information being determined based on a common clock reference.

In a third aspect, the invention provides a method of reproducing content to a user, comprising the steps of
- receiving mass media content at a user device;
- receiving content which is related to the mass media content at the user device;
- matching the content which is related to the mass media content, information descriptive of the mass media content, and data which is related to the user;
- reproducing the resulting matched related content in combination with mass media content at the user device; and
- processing and transmitting user feedback data, the user feedback data being generated at the user device, the user feedback data being representative of a reaction of the user with respect to the reproduced resulting matched related content and mass media content.

Herein, the user-related data may be acquired via the user device.

Herein, the user-related data may be stored either in the user or externally to the user device.

The mass media content to be transmitted to the user device may be selected by the user via the user device.

The mass media content may comprise at least one of streaming moving picture content, downloadable moving picture content, streaming audio content, and downloadable audio content.

The user-related data acquiring may be performed by processing at least one of feedback data entered by the user, mass media content received by the user, times of usage of the user device by the user, individual preferences entered by user, user data entered by third party, personal descriptive user-related data.

Herein, the acquired user-related data may be updated by learning operations based on usage of the user device by the user.

The matching step may be performed either externally to the user device, or internally at the user device.

The related media content may be stored at the user device.

The user device may be one of mobile phone, personal digital assistant, and personal computer.

Mass media content and related content may be received via at least two different transmission channels.

The matching step may be performed simultaneously with receiving the mass media content.

The matching step may be performed simultaneously with reproducing the mass media content.

The matching step may be performed externally to the user device, and prior to the mass content transmitting step.

The user feedback data may relate to one of electronic coupon and billing operation.

In a further embodiment, the method further comprises a step of transmitting an indication which mass media content is currently reproduced at the user device.

In a fourth aspect, the invention provides a computer-program for reproducing content to a user, which performs, when loaded into an electronic device, the steps of
- receiving mass media content at a user device;
- receiving content which is related to the mass media content;
- matching the content which is related to the mass media content, information descriptive of the mass media content, and data which is related to the user;
- reproducing the resulting matched related content in combination with the mass media content at the user device; and
- processing and transmitting user feedback data, the user feedback data being generated at the user device, the user feedback data being representative of a reaction of the user with respect to the reproduced resulting matched related content and mass media content.

Thus, the present invention provides a system and a method having one or more of the following functionalities:
- automatically and "intelligently" matching the related content, especially advertising, with the main mass media content, such as television shows, that is currently being watched/listened to by the user on the user terminal
- and/or automatically and "intelligently" matching the related content with individual user-related data (preferences, profile, external data etc.); and
- processing these matching mechanics basically in real-time if useful or desired in the specific case;
- reproducing the related content automatically together with the mass media content for display in one and the same user device (following also called "user terminal") - either simultaneously, or sequentially, or when the main content has been displayed completely; and
- offering related immediate and simple interactive response opportunities to the user in the same user device where the media display takes place;
- immediate processing of and feedback to the user based on the responses, e.g. for instantaneous shopping of products or services, quiz answers, further information, voting, etc.;
- learning continuously about individual user preferences, based on
   ○ actual responses,
   ○ main mass media content previously watched,
   ○ times of usage,
   ○ user profile and preferences entered by the user or by other consumer data sources,
   ○ other data which might be relevant;
- using these learnt user data in the future matching and displaying algorithms;
- as an option, processing of and billing consumers for purchases of services (e.g. games ring tones, travel trips, tickets etc.) or products (e.g. consumer electronics, music CDs etc.) electronically via an existing account, such as the mobile phone bill;
- as an option, processing of, sending to and displaying electronic coupons in the user device as a result of the user response.

### BRIEF DESCRIPTION OF THE DRAWINGS

The invention is described with taking reference to the drawings, in which
- Fig. 1: illustrates a process flow diagram according to one aspect of the present invention;
- Fig. 2: illustrates a process flow diagram according to a further aspect of the present invention;
- Fig. 3: illustrates a high-level overview of a preferred embodiment of the present invention;
- Fig. 4: illustrates a process flow diagram illustrating a method of operation of the embodiment according to Fig. 3;
- Fig. 5: illustrates schematically, but in more detail, the various key components of the system and method, and their main tasks;
- Fig. 6: illustrates a preferred embodiment of the invention, which is a server-centric variant, wherein television mass media content is matched with advertising as the related content;
- Fig. 7: illustrates an example display of television mass media content and related content in the same media device; and
- Fig. 8: illustrates a further preferred embodiment of the invention, which is a user terminal-centric variant of television mass media content matched with advertising as related content.

### DETAILED DESCRIPTION OF THE INVENTION

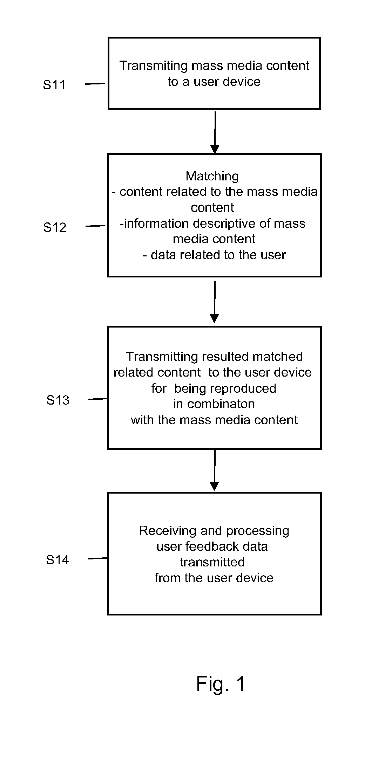

Fig. 1 illustrates a process flow diagram according to one aspect of the present invention. Accordingly, the method of distributing content to at least one user comprises a first step S11 of transmitting mass media content to a user device for being reproduced to the user.

In step S12, content is matched which is related to the mass media content, information descriptive of the mass media content, and data which is related to the user.

Step S13 comprises transmitting the resulting matched related content to the user device for being reproduced in combination with the mass media content to the user.

Step S14 receiving and processing user feedback data transmitted from the user device, the user feedback data being representative of a reaction of the user with respect to the reproduced resulting matched related content and mass media content.

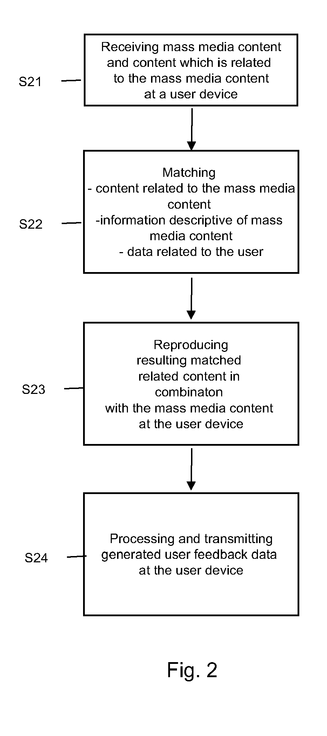

Fig. 2 illustrates a process flow diagram according to a further aspect of the present invention. Accordingly, the method of reproducing content to a user comprises a step S21 of receiving mass media content, and content which is related to the mass media content at the user device.

Step S22 comprises matching the content which is related to the mass media content, information descriptive of the mass media content, and data which is related to the user.

Step S23 comprises reproducing the resulting matched related content in combination with mass media content at the user device.

Step S24 comprises processing and transmitting user feedback data, the user feedback data being generated at the user device, the user feedback data being representative of a reaction of the user with respect to the reproduced resulting matched related content and mass media content.

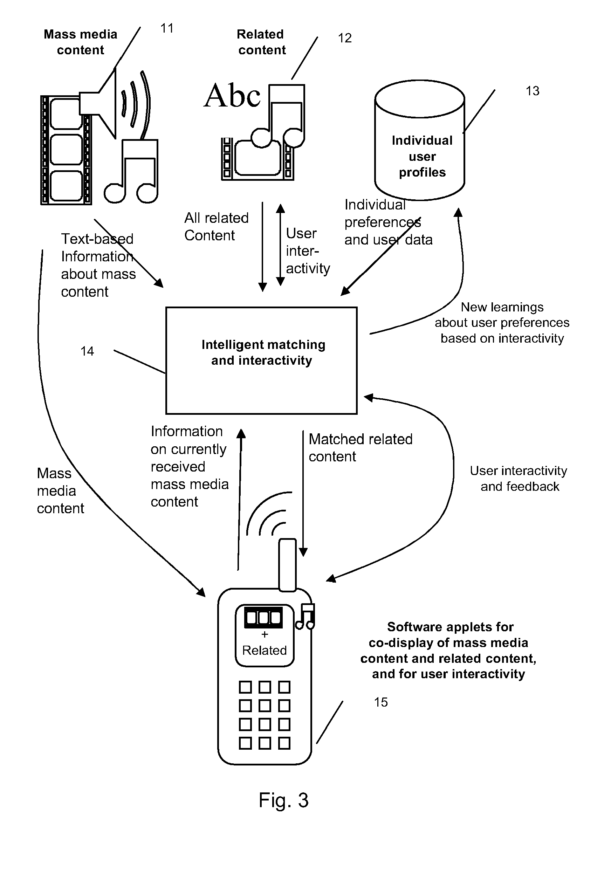

Fig. 3 illustrates schematically in more detail, as a preferred implementation of the present invention, a system for displaying mass media content matched with related content, based on the subject of the mass media content, the keywords of the related content, and the individual user profiles/preferences, all in one and the same media device 15.

According to the first embodiment of the present invention, there is provided a method and system for an automated and "intelligent" matching 14 of the main mass media content 11, such as television shows, with related content 12, such as advertising. This matching is based on three main data sources and a timesynchronization mechanism:
a) Background information about the mass media content (i.e. some form of content description or encryption in free text or data field format). The background information about all mass media content that is available on user terminals can be sourced in various ways: for example, via speech-to-text translation/transcript methods or software, such as already existent today e.g. in the US for live television talk shows, TV news etc. ("closed captioning", "subtitling"). Other possible sources include for example video text as widely available e.g. in Europe, where background information about almost any TV show exists electronically, or Electronic Programming Guides (EPG's), or Internet web pages which describe mass media content electronically. These sources are not exhaustively listed; any other source describing content electronically can be used.
b) Related content 12 in text or data fields (e.g. advertising, sweepstakes etc.), and/or a description of or matching information about the related content (i.e. keywords, or other text or data fields),
c) User-related data, i.e. individual user profiles 13 with general user information (e.g. gender, age, region, language, family situation etc.) and/or personal preferences (e.g. hobbies, living styles, sports, fashion, music, movies, cars, vacation styles etc.), and/or external data descriptive of the user.
d) Information 16 about which mass media content the individual user is currently reproduced on the user terminal 16 (i.e. that can currently be watched or listened to).

If the herein described matching system 14 is not hosted directly within the user terminals, then the network operator(s) or server systems provide an exact "time stamp" to the matching system. That same official time system 14 must be used to observe and track the mass media content 11, in order to do proper matching. An example illustrates the problem: A user switches on a certain mass media channel on a user terminal at a specific moment in time (e.g. when a certain live talk show begins). The user terminal's internal time system shows "9:08:13 a.m." However, this time is only valid in the local user terminal, and is not in accordance with the real time (global official time). Therefore this time stamp cannot be used to determine which mass media content has been switched on by when on the user terminal. E.g., at 9:08.13 a.m. "real time", the latest news were shown on the channel, and not the talk show. Thus, the matching would be performed based on background data about the news program, and not about the talk show.
To avoid this problem, the user terminal needs to send a message to the network operator whenever a different channel has been switched on (the message contains data which channel has been switched on, and not when the channel was switched on). The operator A puts its own time stamp on the message, according to the operator's own time system, which in the example shows the time "9:18:14 a.m.", and passes this message to a server system, which has all time systems from all operators in a specific region available to calibrate the incoming messages. The official global time may be "9:18:16 a.m.". Thus, the server system knows that if a message arrives with a time stamp "9:18:14 a.m." from operator A, then the official global time was "9:18:16 a.m." when the channel was switched on. The system can then perform the matching with the right data.
If the entire matching system 14 is hosted within the user terminals 15, then no external time synchronization is necessary, as the user terminals have their own individual time system.

The matching process 14 is performed through a complex, continuously selflearning method and system, where not only keywords can be matched, but ideally as much context information as possible can be taken into account during the matching process, in order to search for individual matching results which deliver the best available match, based on the broader context. For example, if the mass media content is a TV talk show where the talk show host speaks with a music star as a guest, then the system does ideally process not only the name of the music star and match the name with related content, such as further information about the music star. Instead, the system recognizes that the music star has just started to talk about her latest vacation experiences in the Caribbean, and then automatically matches that information with the personal hobby of sailing of an individual consumer in the database, and matches that in turn with a Caribbean sailing trip offered as related content stored in the related content database.
The matching algorithm can work like this:
- Information in text form from the data sources "background information about the mass media content" and "user-related data" is broken into various possible text fragments automatically.
- Potentially also an automated context analysis could be performed around the text fragments, and the resulting phrases could then be added into the matching process. E.g., if the fragments "great music" and "performing on stage" have been extracted in one of the data sources, then from a web source or other relational database or context-analysis tool the additional phrases "musician", "star", "on tour", "live concert" etc. may be automatically added into the pool of "match words", in addition to the original phrases "great music" and "performing on stage".
- The best match of related content with the mass media content and the user-related data is automatically computed, based on the highest match coefficient, resulting from
   ○ a key (which is easily changeable) where various inputs are weighted and ranked in terms of importance. E.g., user preferences could be weighted with a higher value in matching processes than general user profile data (e.g. age of the user), or mass media content could be weighted higher than user-related data (or vice versa).
   ○ learnings from previous matches and response data, down to the individual level. E.g., if a user responded to sports-related offers more often than to music-related offers, although both sports and music were listed by the user as personal preferences, then the system would automatically put a higher weight on sports offers in the matching process for the future. This would be reflected in the key mentioned above.
   ○ a comparison of the text fragments (extracted based on the weighted analysis mentioned above) with the keywords of all relevant related content. E.g., the top text fragments could be "on tour" and "sailing", based on the ranking above, and these would be compared with all keywords of related content. The result could be that a concert ticket company offering concert tickets ranks highest for a specific user, and that that related content would automatically be reproduced to the user along with the mass media content.

In addition, the system 14 can perform the matching instantaneously, if desired and useful. For example, if a live television show is watched, then the system can process the information and matching basically in real-time.

The matching system and method 14 can be installed either in the server or in the user terminals (see more details below). For this, either a server system or, in most cases, the individual user terminal, have to be altered.

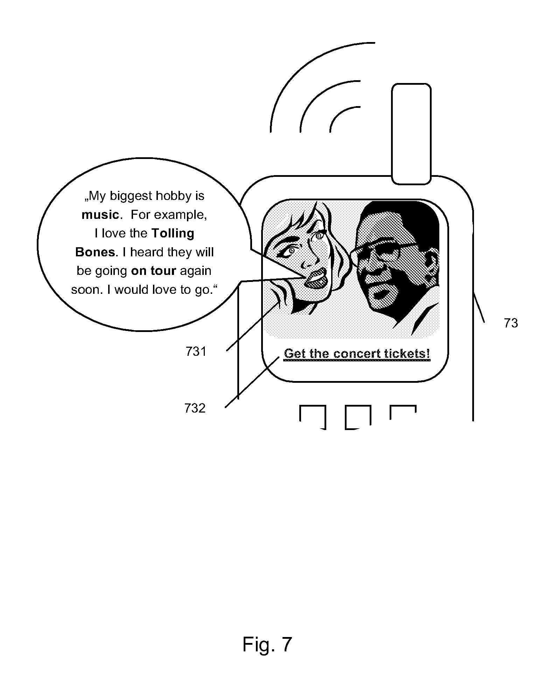

According to the second embodiment of the present invention, there is provided a system and method for automatically reproducing the mass media content and the related content together ("co-displaying") in the same user terminal 15. For this, either a server system or, in most cases, the individual user terminal, have to be altered. A system and method (e.g. a software applet, e.g. based on Java) is provided for the server and/or the user terminal 15 that manages to display media content from two different data sources and, most likely, also from two different channels (e.g. DVB-H for mass media content 11, and UMTS or EV-DO for related content 12), in combination with each other. This co-display can be done in one or a combination of different ways:
a) The mass media content 11 and the individually matched related content are displayed simultaneously. E.g., the mass media content, such as TV programs, could be displayed in the upper part of the display, and the individually matched related content 17 (such as a text link), could be displayed in the lower part of the display (see Fig. 7). In case the user terminal 15 is a mobile phone, for example, the screen format would even often support this co-displaying, as mobile phones often tend to have screen formats which are inverse (e.g. 3:4, 9:16) to mass media content formats, such as TV shows (e.g. 4:3, 16:9).
b) The two contents 11 and 17 are displayed in a continuous sequential form. E.g., the mass media content, such as TV programs, can be displayed, then a break takes place, then the individually matched related content (such as an advertising spot or a text link) will be displayed, then the mass media content will continue, and so on.
c) The mass media content and matched related content 17 are displayed one after another. E.g., the mass media content, such as a music clip, can be displayed, and only after the mass media content has been completely displayed, then the individually matched related content 17 (such as an advertising spot or a text link) will be displayed.

According to the third embodiment of the present invention, there is provided a system and method for allowing immediate and simple user interactivity to the related content, in the same user terminal where the mass media content and the matched related content are displayed 15. For this, either a server system and, in most cases, the individual user terminal, have to be altered. A system and method (e.g. a software applet, e.g. based on Java) is provided for the server and/or the user terminal that manages to process user responses, and/or send and/or receive additional related content as a feedback, using potentially different channel systems. In addition, this system can optionally also provide simple billing mechanisms for potential service or product purchases by the user, and an electronic coupon system (including potentially electronic coupons for mobile phones).

According to the fourth embodiment of the present invention, there is provided a system and method for continuous "learning" about user preferences and background data 13, 14 and 18). Users register and allow the system to gather information on user preferences based on user responses and selections. These responses and selections include, but are not limited to, for example, the individual selections of mass media content, the responses to related contents, the mini-sites viewed in detail, the products and/or services purchased, the time of usage, etc.

The gathered data is processed and stored in database 13, and used later for ever-more targeted and useful related content matching, as described in the first embodiment of the present invention. I.e., the user responses to related content, the type of mass media content selected by the user (e.g. politics, boulevard, action movies, comedy etc.), the preferences entered, all influence
- the weighting key used for future matching processes
- the context analysis and the corresponding addition of text fragments into the "matching pool" of text phrases
described in the first embodiment of the present invention, and thereby the matching results, and thereby the related content reproduced on the user terminal in combination with mass media content.

The combination of the four embodiments allows for the first time a full mass media experience with ever-more individually targeted related content directly offered in addition, and with an immediate response capability.

In a further preferred embodiment, as described later, this enables for the first time targeted TV advertising which is based on keywords (potentially even live) and with an immediate response capability in the same medium. With the present invention, because of very low production costs, large numbers of potential advertisers, including smaller companies, can provide TV advertising for millions of consumers, and in an unprecedented highly targeted fashion.

Consumers may, in return for receiving related content in addition to mass media content, and for potentially allowing data collection, (a) potentially receive the mass media content at a lower cost, or even entirely for free, and/or (b) receive related content which will over time fit better and better to their personal preferences.

Mass audiences can use the present invention, if the user terminals 15 are e.g. in the form of mobile phones, as no additional set-top box is required. The described necessary systems and methods can either be installed in new phones (mobile phones are regularly replaced anyway), or potentially downloaded over-the-air as a software applet (e.g. based on Java).

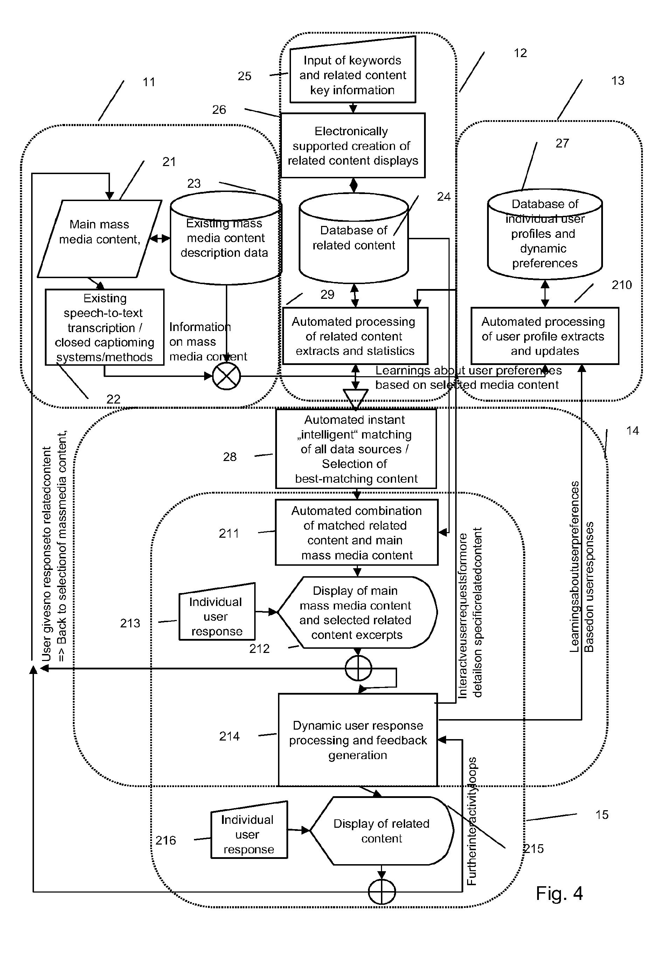

The process flow
Fig. 4 shows the process flow of the present invention. In Fig. 4, the process works as follows.

Users select or request on their user terminal 15 (e.g. mobile phone, PDA, PC, etc.) certain main mass media content 21, which can be streaming or batch-based, or download-based, and which is provided through a media channel, be it a television channel, a mobile channel (e.g. DVB-H, WCDMA, EV-DO, Wifi, WiMax , UMTS, HSDPA etc.) or any other media transmission system.

Alternatively or in combination,
- existing or newly developed speech-to-text or closed captioning systems 22 provide the spoken words in the mass media content in text form (provided either live for live media or as a combination with pre-recorded mass media content),
- and/or background information 23 about the mass media content (e.g. a summary of a movie plot) describes the mass media content in general. Sources for this background information can be, but are not limited to, video text, Electronic Programming Guides (EPG's), Internet web pages etc.
Speech-to-text or captioning system and/or data 22 and background information 23 can be processed either on a server system or on individual user terminals 15.

In addition, a database on a server system (potentially passed on, in encrypted and batch mode also to user terminals) contains a potentially large amount of related content 24. This related content 24 can be, but is not limited to, for example advertising text messages/ graphics/moving pictures (spots), sweepstakes, voting activities, information etc. Keywords 25 are also input and stored in the relational database 24, which are to trigger the related content for matching processes. Thus, the keywords are linked to the related content. For example, the message "Get the concert tickets" is linked to the trigger keywords "concert", "on tour", etc.

The keywords and the related content 24 are input via an interface 25 by a potentially large number of external entities (i.e. persons, companies, organizations), preferably via an always-available Internet web page(s). The keywords can be sold against a price scheme, or auctioned online to the highest bidders. In addition, the duration of displaying (e.g. 2s, 5s, 20s) for the related content can be specified and can influence the cost of "renting" keywords.

An electronic method and system 26, preferably a software tool with an Internet web interface, can support the creation and formatting of the related content into the proper layout which fits the user terminals. This method and system 26 is to make the creation of properly designed related content as easy as possible to the external entities. For example, different graphic layouts could be offered for use, and animations of graphics and/or text can be done very easily. Goal is the substantial reduction of production costs and efforts to create the related content for the external entities.

In addition, a database 27 contains user-related data, such as individual user profiles 13 (e.g. name, mobile number, address, age, gender, family status etc.) and personal preferences (e.g. selected mass media content, responses to related content, hobbies, vacation regions, cars, lifestyle, colors, fashion style etc.). The database is automatically and continuously updated by a mechanism 210, as users select mass media content to watch/listen to, or as they respond interactively to related content, or as they purchase services or products that have been offered in related content, or as they update their profiles or personal preferences.

A matching and interactivity system 14, 28 receives and/or requests the three data types described above, i.e. a) descriptions of the mass media content currently watched/listened to by the user, b) related contents and their keywords 12, 24, c) individual user profiles and preferences 13. The system also receives information which mass media content 11 is currently watched or listened to by the user (e.g. when channels are activated or downloads are triggered), with an exact time stamp, which is based on the same time system as is used for all currently available mass media contents 11.

The system 14, 28 automatically finds the best match between these three data types, via a complex system and method ("matching algorithm"). This can be done in basically real-time, if useful and desired (e.g. for streaming live-broadcasted mass media content). The system may reside in a server system and/or the user terminals.

A further system 29 may automatically store and administer the matching results and update the related content database 24. In addition, this system 29 may also automatically create statistics about the number and potentially profiles of users who have seen/heard each related content data file, and potentially responded to it 214, plus potentially purchasing, billing and couponing data.

A further system automatically combines 211 and reproduces 212 any matched related content together with the user-selected main mass media content, on the same user terminal (simultaneously, sequentially, or at the end of the mass media content). The system draws the full matching related content from the related content database 24. This system can be a software applet and/or hardware system in the user terminal, or a software program and/or hardware system on the server system.

If no individual user response occurs while the related content is displayed or played, the related content ceases to be shown after the pre-determined duration, and the mass media content 11 continues to be displayed 21.

If an individual user response occurs to the displayed related content 213, then a system (server-based or user terminal-based) processes the response (e.g. user clicks on links, or text input via a user terminal keyboard), and displays a feedback 215, potentially drawing on more related content via the related content processing system (29 and database 24. The user responses are also transmitted to the individual user processing system 210 and database 27.
Potentially the sound of the mass media content may continue to play on the user terminal while the related content is viewed by the user.

This interactivity loop can continue for a non-specified number of rounds, depending on further user response 216. It can also lead to billing via external systems for purchases of services or products, or to electronic coupons being sent to or created in the user terminal 214.

If no further user response occurs, then after a short period the regular display of mass media content and related content resumes and continues.

It should be noted that the entire display mechanism of mass media watching/listening and related content may be stopped by the consumer at any time during the entire process.

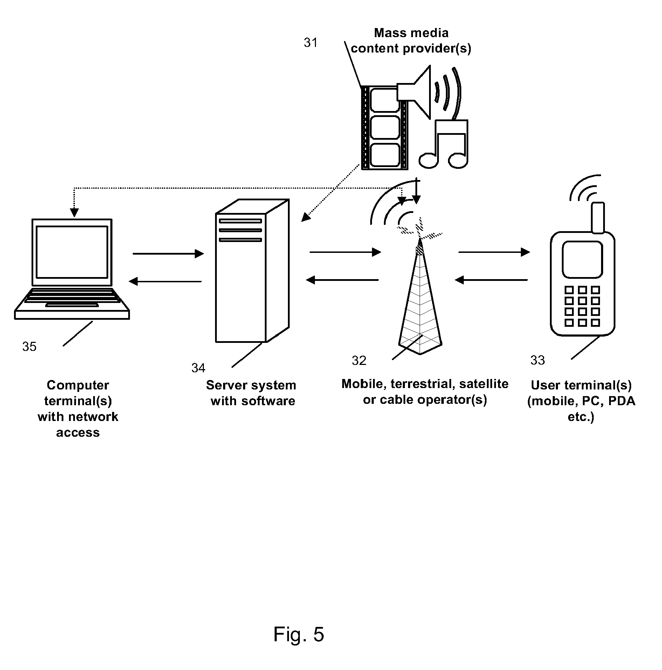

The key system components
Fig. 5 shows the key system components of the present invention. In Fig. 5, all connections between different components can be mobile- or land-line-based, and can use the Internet, private VANs, LANs/WANs, (W)CDMA, EV-DO, DVB-H, GSM, GPRS, UMTS, HSDPA, Wifi, WiMax, Bluetooth, infrared, any other mobile networks or standards, broadband/television cable, terrestrial/satellite broadcasting, or any other data transmission systems or networks. The data can be encrypted or non-encrypted.

The various key components in Fig. 5 perform different tasks.

The mass media content provider(s) 31 send their mass media content to one or more operators 32, and potentially also directly to one or more server systems 34.

The same mass media content providers 31, or potentially also separate entities (e.g. companies) or systems, send text information about the available mass media content to one or more operators 32, and/or directly to a server system 34.

The server system(s) with software 34 receive the text information from the mass media content providers or separate entities. In addition, the server systems may provide a system for registration, creation, formatting, production and upload of related content and keywords, preferably via website(s).

The server systems (or alternatively the user terminals 33) also host and process the matching of mass media content descriptions, related content and individual user profiles/preferences.
They then send the related content to the operator(s) 32, and potentially receive feedback from user terminals via the operator(s), which the server systems again process and respond to via the operator(s).

The server systems (or alternatively the user terminals 33) also host the system and database for individual profiles and preferences, and continuously update them to create a "learning" system. The server systems also hosts the system for producing the user viewership, response and purchasing statistics and data for the related content providers, which it then sends to or makes available to the computer terminals 35 of related content providers, or which it provides via secure website(s) against authorization mechanisms.

The server system may also optionally host systems for processing payments or payment information from the operator(s) or from financial institutions for products and/or services, which were purchased on the user terminals by way of interactive responses to displayed related content. The server system may also host systems for crediting and invoicing related content providers, who may sell the products and services, and for invoicing related content providers for the display of their related content, and/or for the use of the related content production tools offered online.

The server system may also host a system for automatic creation of electronic coupons, and for sending them on to the operator(s).

The computer terminal(s) 35 have access to online websites and/or electronic tools which help them to upload related content and trigger keywords. The computer terminals also send the related content to the server systems 34.
The computer terminals may also potentially provide related content on demand, based on interactive user requests from user terminals (via operators). I.e., this function originally described for the server system(s) may be decentralized to external terminals of individual providers of related content.

The computer terminals may receive and display the user, response and billing statistics and data from the server systems and/or the operator(s).

In addition, the computer terminals may request, authorize and/or receive payment for offered services and/or products, or for the related content display, from/to the server systems and/or the operator(s) and/or financial institutions

The operators 32 can be mobile network operators, hotspot operators, cable operators, satellite operators, or terrestrial operators, or any other multi-user network operators who allow users to use their network for data transmission (with or without a fee).

The operators basically pass on information and data between
- Mass media content providers 31 and the user terminals 33: Mass media content, and potentially description data about mass media content;
- Server systems 34 and the user terminals 33: Potentially information which mass media content is currently being watched, related content (best-matching selection or encrypted batch), potentially user profiles and preferences, potentially interactive responses;
- Computer terminals 35 and the user terminals 33: Potentially interactive responses, potentially additional related content.
In addition, the operators may potentially process billing of and payment by users for services and/or products purchased by users through responses to displayed related content. Operators may also potentially pass on payments to server systems or computer terminals of related content providers.

The user terminals 33 can be mobile terminals, especially mobile phones, or PDA's, or personal computers, or any other device, which can a) receive mass media content and other data, b) send data, c) can process the key functions described in this invention, or can store and run the software applet and/or use the additional hardware necessary to process the key functions described in this invention.

The user terminals receive and display the mass media content received from the operator 32. The user terminals may also host and run a system for receiving and co-displaying related content matched by the server systems 34 together with the mass media content on the same user terminal (either simultaneously, or sequentially, or at the end of the mass media content display).

The user terminals may then process and send interactive user responses to the displayed related content to the operator(s) 32, and potentially receive feedback from server systems 34 or computer terminals 35 via the operator(s), which the user terminals again process and display.

In an expanded version, the user terminals may also potentially take over some of the server functions and
- receive the text information from the mass media content providers or separate entities;
- host and process the matching of mass media content descriptions, related content and individual user profiles/preferences;
- host the system and database for individual profiles and preferences, and continuously update them to create a "learning" system;
- hosts the system for producing the user viewership, response and purchasing statistics and data for the related content providers, which it then sends to or makes available to the server systems (34) on an individual level in a batch or real-time mode, and which the server system then consolidates across many individual users;
- host systems for authorizing payments to the operator(s) or to financial institutions for products and/or services, which were purchased on the user terminals by way of interactive responses to displayed related content.
- host a system for automatic creation and display of electronic coupons.

It is to be noted that, as described, the tasks that the server systems 34 and the user terminals 33 perform can to some extent shift between the server systems and the user terminals, depending on
- the computing and processing power of the user terminals (which are generally increasing over time due to technological advancements);
- synergy effects which can be realized by a server system;
- bandwidth, reliability and costs of data transmission between servers and user terminals.

Thus, in the following description of preferred embodiments, a case A for a more server-centric system, and a case B or a more user terminal-centric system, are included.

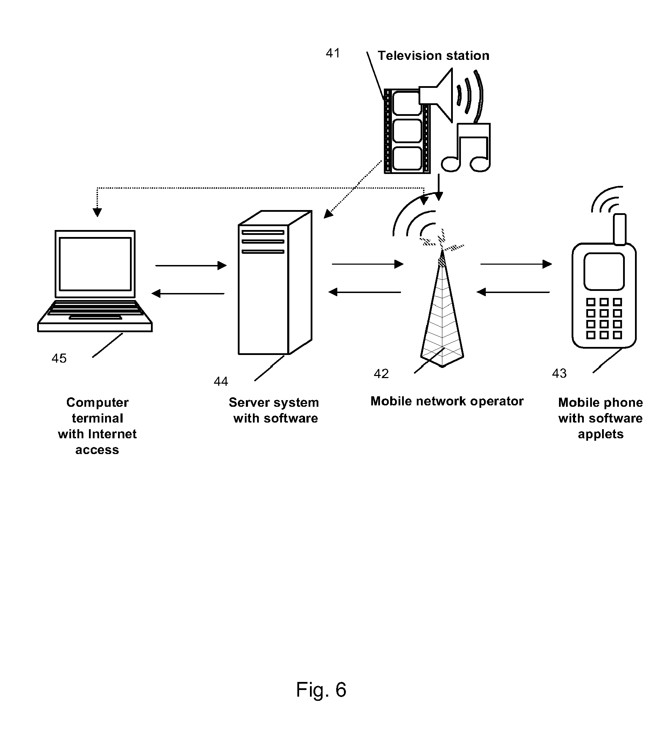

Figs. 6, 7 and 8 show preferred implementations of the present invention.

### Implementation A (Server-Centric)

In Implementation A (Server-Centric),
- the mass media content is television, music, movie or other entertainment content with moving pictures and/or ongoing sound;
- the mass media content providers are any entities offering the mentioned mass media contents, in specific, but limited to, television companies;
- the related content is advertising, sweepstake, voting, information, or other mobile- or content-related content. (Mobile content can be, but is not limited to, games, ring tones, movie clips, wall papers etc.);
- the users are mobile phone or mobile device users;
- the user terminals are mobile phones or mobile devices;
- the operator is a mobile telephony operator, or Wifi hotspot, WiMax hotspot or other mobile network operator;
- the computer terminal users are entities intending to place advertisements, or entities offering mobile content;
- the computer terminals are any computers directly or indirectly connected to the Internet.

In the following, Fig. 6 is explained, but only those parts that have not been explicitly mentioned above in the more general descriptions of the present invention. Fig. 6 shows a concrete example to explain Implementation A (Server-Centric). This embodiment is described as follows:

The mass media content provider is a television station 41, providing several different television channels. On one of the channels, a live talk show is currently running, where the talk show host interviews a top politician.

Live speech-to-text transcripts of the interview are offered to television viewers by the TV station ("closed captioning"), and made available also in electronic form. In addition, videotext and Internet web pages name the talk show host and today's guest.

This information about the talk show is fed live into the server system 44 via different transmission systems (via Internet interface provided by the TV station, and as a backup, via IP Sec tunnel to the TV station's private VAN).

A few days before, the server system 44 has received related content in the form of advertising for concert tickets of many musicians from Company A, which offers event tickets for all kinds of events. Company A has entered the advertising messages on a computer terminal 45, by accessing a secure website offered by the server system 44. The advertising message gets the one-liner message "Get the concert tickets !", and 12 linked keywords. Company A enters an online auction on the server system website for the keywords and bids highest on 7 keywords, among them "on tour" and "concert". The advertising message is rented for a 10 second-long display in case the keywords are matched.

In addition, Company A uses the tools provided online on the website by the server system to create a mini-page with graphics, text and sound in case users respond to the one-line advertising message "Get the concert tickets!". The process is simple and takes little effort and time.

A user switches on his user terminal, a mobile phone 43, which is capable of receiving and displaying mobile television, via DVB-H. It can also download video sequences via UMTS. The user turns on the live television feed via DVB-H, and selects the talk show channel mentioned above. In an applet on her phone, the user has previously opted in to receiving related content in return for being able to watching mobile television for no additional charge, and has given her profile. She has also tick-marked some of her preferences in the applet, among them traveling to Spain, fun clothing, fast cars and rock music. The applet has previously transmitted her profile to the server system via the mobile operator, which the user has a mobile phone contract with 42.

Because the user has subscribed to the related content service, her phone applet automatically sends a text message to the operator that the user has switched on the talk show television program. This message is delivered with the exact time stamp of the operator to the server system, which compares it to its own time system (to calibrate it for the specific user).

The server system then automatically starts a matching process for the individual user, trying to match the live talk show text feed of the interview with the politician, the background information about the talk show (host name, guest name), and the individual user preferences with all the available related content, which is stored in the database of the server system.

The talk show shifts from various discussions about current political issues to personal topics, and the interviewer asks about the politician's hobbies. She answers, "My biggest hobby is music. For example, I love the Tolling Bones. I heard they will be going on tour again soon. I'd love to go. We'll see."

The matching system automatically analyses the live feed, and detects the best match between the keyword "on tour", various contexts (music as a topic, well-known personality who is speaking etc.), the personal profile of the user (she likes rock music) and related content (advertising) for concert tickets of the Rolling Stones and other rock music musicians.

As a result, the server system transmits the advertising link "Get the concert tickets!" live via the operator 42 to the user's mobile phone 43. The software applet on the mobile phone enables a display of the talk show simultaneously with the advertising phrase "Get the concert tickets!" right underneath in the mobile phone display, just as the politician has completed her statement about her music hobby.

The user sees the message, and clicks on it. While the sounds of the talk show continues in the background, a Java applet sends on the user response via the operator to the server, which in turn delivers the next mini-pages to the mobile phone, which describes the concert ticket offer, as previously entered on the server system website by Company A.

The user clicks on several other links (feedback loops via mobile phone-operator-server), and orders two Tolling Bones tickets on her mobile phone. The purchase request is also transmitted back to the server system, which electronically creates a mobile concert ticket in the form of an individual mobile bar code coupon, which is transmitted via the operator back to the mobile phone, and displayed and stored in it. A purchase receipt is sent to the mobile phone, while the operator bills the consumer for the tickets on the monthly phone bill, and transfers the money to the server system, which in turn passes it on to Company A.

The television program on the mobile phone continues.

Meanwhile, the server updates the user profile with her purchases and clicks for better future matches. The information which channel and program she selects is continuously recorded and stored.

At the end of the advertising booking period, the server system automatically creates statistics for all advertising clients, including Company A, with anonymous user profile information (number ad viewers, profile of ad viewers, preferences of ad viewers, clicks, purchases, programs watched together with the ad messages, etc.).

These statistics are sent to each client individually according to the keywords it has "rented".

Fig. 7 shows how the preferred embodiment may look like in reality with a screen example on the mobile phone 73. This is a concrete (but not limiting) example how a display of mass media television and automatically matched related advertising content could look like on a mobile phone 73. In this case, the text 732 underneath the television talk show 731 is a link leading to a purchase applet or mini-site for Tolling Bones and other concert tickets. The user seeing the link has registered as a person who is, among other things, interested in rock music.

### Implementation B (User Terminal-Centric)

In Implementation B (User Terminal-Centric), all the key components are the same as in Implementation A (Server-Centric): Television station 61, mobile network operator 62, mobile phone with software applets 63, server system 64, and computer terminal 65.

In Implementation B, however, more functionality is shifted to the user terminal, and away from the server. In the future, it is expected that individual user terminals can handle more and more functionality, as their processing and data storage capabilities will become ever stronger, due to technological advancements. This is especially true for mobile phones and mobile devices in general.

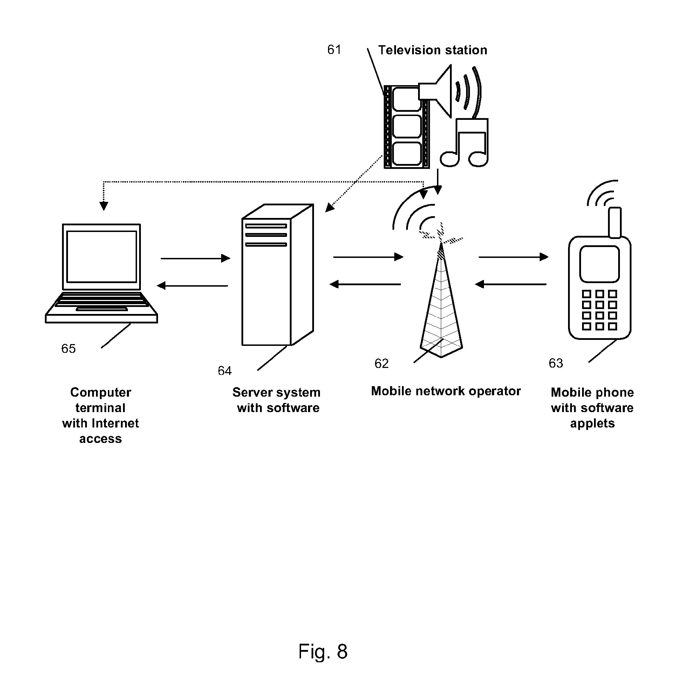

In the following, Fig. 8 is explained, but only those parts that have not been explicitly mentioned above in the more general descriptions of the present invention, and in Implementation Case A (Server-Centric). Thus, only the differences to Implementation Case A (Server-Centric) are described.

Fig. 8 illustrates a description of Implementation B (User Terminal-Centric), using a concrete example. In Fig. 8, the user terminal-centric implementation, the server performs only the related content registration, production and billing functions, the registration profile storage and analysis functions, and the statistics functions.

The user terminal (i.e. mobile phone in the example), in contrast, performs several functions in addition to those described in Best Mode Implementation A (Server-centric):
The user terminal
- stores and processes the user profile and preferences;
- receives and stores a batch load of encrypted related content (advertisings) with their related keywords from the server via the operator in a regular time interval (e.g. once a week);
- receives and processes from television station or server system, via the operator, the description data about the watched television data, i.e. the live text feed, the video text information, and the web information;
- runs the "intelligent" matching process of the watched television program, the related content keywords, and the individual user profile/preferences;
- runs the feedback loops internally in the mobile phone, without server and operator connections necessary, as the entire related content used for matching is stored in the handset, including the mini-sites attached to the keywords etc.;
- the purchasing process for services and products;
- the generation of electronic coupons.

## Claims

1. An electronic device for reproducing content to a user, comprising:
- means for receiving mass media content;
- means for receiving content which is related to the mass media content;
- means for matching the content which is related to the mass media content, information descriptive of the mass media content, and data which is related to the user;
- means for reproducing the resulting matched related content in combination with the mass media content;
- means for generating user feedback data, the user feedback data being representative of a reaction of the user with respect to the reproduced resulting matched related content and mass media content; and
- means for processing and transmitting the generated user feedback data.

2. The electronic device according to claim 1, further comprising means for acquiring the user-related data, and means for storing the user-related data, and the related media content.

3. The electronic device according to claim 1 or 2, whereby the electronic device is one of mobile phone, personal digital assistant, and personal computer.

4. A method of distributing content to at least one user, comprising the steps of:
- transmitting mass media content to a user device for being reproduced to the user (S11);
- matching content which is related to the mass media content, information descriptive of the mass media content, and data which is related to the user (S 12);
- transmitting the resulting matched related content to the user device for being reproduced in combination with the mass media content to the user (S13); and
- receiving and processing user feedback data transmitted from the user device, the user feedback data being representative of a reaction of the user with respect to the reproduced resulting matched related content and mass media content (S14).

5. A method of reproducing content to a user, comprising the steps of
- receiving mass media content at a user device (S21);
- receiving content which is related to the mass media content at the user device (S21);
- matching the content which is related to the mass media content, information descriptive of the mass media content, and data which is related to the user (S22);
- reproducing the resulting matched related content in combination with mass media content at the user device (S23); and
- processing and transmitting user feedback data, the user feedback data being generated at the user device, the user feedback data being representative of a reaction of the user with respect to the reproduced resulting matched related content and mass media content (S24).

6. The method of claim 4 or 5, wherein the mass media content comprises at least one of streaming moving picture content, downloadable moving picture content, streaming audio content, and downloadable audio content.

7. The method of one claims 4 to 6, wherein the information descriptive of mass media content is at least one of speech-to-text type, closed captioning type, subtitling type, video-text type, electronic-programming-guide type, internet-web type.

8. The method of one of claims 4 to 7, wherein the mass media content and the matched related content are transmitted via two different transmission channels.

9. The method of one of claims 4 to 8, wherein all transmission steps are performed via wireless communication, and the user device is a mobile communication device.

10. The method of one of claims 4 to 9, further comprising the steps of:
- receiving a first indication which mass media content is currently transmitted to a user device; associating a transmitting time information with the first indication;
- receiving a second indication which mass media content is currently reproduced at a predetermined user device; associating a reproducing time information with the second indication;
whereby transmitting time information and receiving time information being determined based on a common clock reference.

11. A computer-program for reproducing content to a user, which performs, when loaded into an electronic device, the steps of the method according to one of claims 4 to 10.
